(19) Europäisches Patentamt
European Patent Office
Office européen des brevets

(11) Veröffentlichungsnummer: **0 054 772**
**B1**

(12) # EUROPÄISCHE PATENTSCHRIFT

(45) Veröffentlichungstag der Patentschrift: **20.06.84**

(51) Int. Cl.³: **B 01 D 53/14,** C 01 B 17/04

(21) Anmeldenummer: **81110062.7**

(22) Anmeldetag: **01.12.81**

(54) **Verfahren zum Reinigen eines Gasstroms.**

(30) Priorität: **18.12.80 DE 3047830**

(43) Veröffentlichungstag der Anmeldung: **30.06.82 Patentblatt 82/26**

(45) Bekanntmachung des Hinweises auf die Patenterteilung: **20.06.84 Patentblatt 84/25**

(84) Benannte Vertragsstaaten: **BE DE FR GB NL**

(56) Entgegenhaltungen:
**GB - A - 1 470 950**
**US - A - 4 124 685**
**US - A - 4 198 388**

(73) Patentinhaber: **Linde Aktiengesellschaft, Abraham-Lincoln-Strasse 21, D-6200 Wiesbaden (DE)**

(72) Erfinder: **Zeller, Rainer, Dr., Am Mauerberg 3, D-8022 Grünwald (DE)**
Erfinder: **Belloni, Aldo, Dr., Rainerstrasse 37, D-8039 Puchheim (DE)**
Erfinder: **Heisel, Michael, Dr., Seestrasse 6, D-8000 München 40 (DE)**

(74) Vertreter: **Schaefer, Gerhard, Dr., Linde Aktiengesellschaft Zentrale Patentabteilung, D-8023 Höllriegelskreuth (DE)**

EP 0 054 772 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Reinigen eines mindestens mit Kohlendioxid und Schwefelwasserstoff verunreinigten Gasstroms durch eine für Schwefelwasserstoff selektive Sauergaswäsche, aus der ein mit Schwefelwasserstoff angereichertes erstes Abgas abgezogen und einer Schwefelgewinnung zugeführt wird, und ein bei der Schwefelgewinnung anfallendes, mindestens Kohlendioxid und Schwefelverbindungen enthaltendes zweites Abgas hydriert und danach zur Sauergaswäsche zurückgeleitet wird.

Ein bei der Verarbeitung von Rohgasströmen häufig erforderlicher Verfahrensschritt ist die Abtrennung von Sauergasen worunter im wesentlichen Kohlendioxid, Schwefelwasserstoff, Kohlenoxidsulfid, Cyanwasserstoff und Merkaptane verstanden werden. Von diesen wegen ihrer korrodierenden oder katalysatorschädigenden Eigenschaften oder auch aus anderen Gründen von nachgeschalteten Anlagen fernzuhaltenden Verbindungen sind Kohlendioxid und Schwefelwasserstoff am häufigsten und im allgemeinen in höchster Konzentration in den Gasströmen enthalten.

Beispielhaft für derartige Gasströme sei auf Erdgas, Spaltgase und insbesondere auf wasserstoffhaltige Gasgemische hingewiesen. Zur Erzeugung wasserstoffreicher Gasgemische, wie sie etwa als Ausgangsgasgemische für Hydrierungen, für die Ammoniaksynthese, für die Methanolsynthese und weitere Synthesen dienen, wird heute üblicherweise von Rohölen, Raffinerie-Rückstandsölen, Kohle oder ähnlichen kohlenstoffhaltigen Stoffen ausgegangen. Diese Rohstoffe, die in den meisten Fällen Schwefel enthalten, werden einer oxidativen thermischen Spaltung mit Sauerstoff bei erhöhter Temperatur und bei erhöhtem Druck unterzogen. Nach Abscheidung von störenden Bestandteilen, wie Russ, Teer, Naphthalinen, höheren Kohlenwasserstoffen und Wasser liegt dann ein Gasgemisch vor, das im wesentlichen aus Wasserstoff, Kohlenoxiden, Schwefelwasserstoff und Spuren von Stickstoff, Argon und Methan besteht. Ist es das Ziel, aus diesem Gas ein Ausgangsgemisch für Oxosynthesen, also ein im wesentlichen aus Kohlenmonoxid und Wasserstoff bestehendes Synthesegas, zu erzeugen, werden die Sauergase aus diesem Gas sofort entfernt. Wenn dagegen beabsichtigt ist, ein im wesentlichen nur aus Wasserstoff bestehendes Gas, beispielsweise Hydrierwasserstoff oder ein Ausgangsgasgemisch für die Ammoniaksynthese, zu gewinnen, dann wird das im Gas enthaltene Kohlenmonoxid zunächst einer Konvertierung mit Wasserdampf unterzogen, was zur Oxidation des Kohlenmonoxids zu Kohlendioxid und zur Bildung weiteren Wasserstoffs führt. Bei einer derartigen Konvertierung werden etwa im Rohgas gegebenenfalls enthaltene Merkaptane und Kohlenoxidsulfide weitestgehend zu Schwefelwasserstoff reduziert, so dass das aus diesen Gasen anschliessend zu entfernende Sauergas praktisch nur aus Kohlendioxid und Schwefelwasserstoff besteht.

Da bei der Abtrennung von Sauergasen aus Rohgasen zu beachten ist, dass Schwefelwasserstoff im Gegensatz zu Kohlendioxid wegen seiner Giftigkeit nicht oder zumindest nur in äusserst geringen Konzentrationen an die Umwelt abgegeben werden darf, wird diese Komponente üblicherweise in einer nachgeschalteten Anlage auf elementaren Schwefel aufgearbeitet. Da das für die Umwelt ungefährliche Kohlendioxid in einer Schwefelgewinnungsanlage jedoch lediglich als unerwünschter Ballast anzusehen ist, werden zur Entfernung dieser Sauergase aus Gasströmen in grossem Umfang für Schwefelwasserstoff selektive Wäschen angewendet. In diesen Verfahren fällt bei der Regenerierung des Waschmittels neben einem schwefelwasserstoffreichen, nur einen Teil des abgetrennten Kohlendioxids enthaltenden Gasstrom ein von Schwefelwasserstoff freier kohlendioxidhaltiger Restgasstrom an, der unmittelbar in die Atmosphäre abgelassen werden kann. Gegebenenfalls kann aus diesem Strom auch reines Kohlendioxid für andere Verwertungszwecke isoliert werden.

Für die selektive Abtrennung sind sowohl chemische als auch physikalische Waschverfahren entwickelt worden. Insbesondere bei der Reinigung eines relativ stark mit Kohlendioxid verunreinigten Gasstroms werden dabei seit Jahren in grossem Umfang die physikalischen Waschverfahren bevorzugt angewendet. Die dabei eingesetzten Waschflüssigkeiten lösen die Sauergasbestandteile ohne chemische Bindung und können von ihnen durch Entspannen, Erwärmen und/oder Destillieren wieder befreit werden. Insbesondere für die Abtrennung von Kohlendioxid und Schwefelwasserstoff haben sich polare organische Lösungsmittel und hierunter insbesondere das Methanol, das bei Temperaturen unter 0 °C erhebliche Mengen Sauergas zu lösen vermag, als besonders geeignet erwiesen.

Chemische Waschverfahren sind z.B. aus der US-A 4 198 388 und der US-A 4 124 685 bekannt.

Die US-A 4 198 388 beschreibt ein Verfahren zum Reinigen eines mit $CO_2$ und $H_2S$ verunreinigten Gasstroms, bei dem ein für $H_2S$ selektives, chemisch wirkendes Waschmittel, insbesondere Monoäthanolamin, zur Anwendung kommt. Aus der Sauergaswäsche wird ein mit $H_2S$ angereichertes erstes Abgas abgezogen und einer Schwefelgewinnung zugeführt. Das bei der Schwefelgewinnung anfallende zweite Abgas kann reduziert und das $H_2S$ zur Waschsäule zurückgeführt werden. Da bei diesem Verfahren chemisch wirksame Waschmittel eingesetzt werden, entfällt zur Regenerierung eine $H_2S$-Anreicherungssäule. Gleiches gilt für das aus der US-A 4 124 685 bekannte Verfahren zum Reinigen eines ebenfalls $H_2S$- und $CO_2$-haltigen Gasstromes.

Die bei der für Schwefelwasserstoff selektiven Wäsche anfallende, mit Schwefelwasserstoff angereicherte Restgasfraktion enthält, je nach dem

Schwefelwasserstoffgehalt des zu reinigenden Gasstroms, üblicherweise zwischen 10 und 70 Mol% Schwefelwasserstoff und wird beispielsweise in einer auf der Claus-Reaktion beruhenden Schwefelgewinnungsanlage zu elementarem Schwefel verarbeitet. Hierzu ist es erforderlich, einen Teil des Schwefelwasserstoffs zu Schwefeldioxid zu oxidieren, um ein für die Claus-Reaktion

$$2\,H_2S + SO_2 \rightarrow 3\,S + 2\,H_2O$$

geeignetes Einsatzgas zu erzeugen. Ein Verfahren dieser Art ist beispielsweise in Hydrocarbon Processing, April 1973, Seite 107 beschrieben.

Ein Nachteil der auf der Claus-Reaktion beruhenden Schwefelgewinnung ist darin zu sehen, dass die Umsetzung zu elementarem Schwefel nicht vollständig ist, sondern dass stets ein Schwefelverbindungen, insbesondere Schwefelwasserstoff und Schwefeldioxid, enthaltendes Abgas anfällt. Obwohl der grösste Teil der aus dem Gasstrom abgetrennten Schwefelverbindungen in einer auf der Claus-Reaktion beruhenden Schwefelgewinnungen zu elementarem Schwefel aufgearbeitet wird, sind die im Abgas enthaltenen Schwefelverbindungen noch in einer Konzentration anzutreffen, die eine Abgabe an die Atmosphäre meist verbietet. Zur weiteren Reinigung dieses Abgases sind deshalb schon eine ganze Reihe von Verfahren entwickelt worden, die jedoch alle den Nachteil hoher Investitionsaufwendungen beinhalten. Derartige Verfahren sind beispielsweise in Hydrocarbon Processing, April 1973, Seiten 111–116 beschrieben.

Der Erfindung liegt deshalb die Aufgabe zugrunde, ein Verfahren der eingangs genannten Art so auszugestalten, dass die Abgabe von Schwefelverbindungen aus dem Abgas einer Schwefelgewinnungsanlage in die Atmosphäre mit möglichst geringem Aufwand vermieden wird.

Diese Aufgabe wird dadurch gelöst, dass die Sauergaswäsche mit einem physikalisch wirkenden Waschmittel mit unterschiedlicher Löslichkeit für Schwefelwasserstoff und Kohlendioxid durchgeführt wird, dass die Sauergaswäsche einen Waschteil sowie einen Regenerierteil mit einer Schwefelwasserstoff-Anreicherungsstufe enthält und dass das hydrierte zweite Abgas in die Schwefelwasserstoff-Anreicherungsstufe zurückgeleitet wird.

Erfindungsgemäss wird damit ein Verfahren vorgeschlagen, das unter Vereinfachung des apparativen Aufwandes eine praktisch vollständige Gewinnung des Schwefels in elementarer Form ermöglicht. Gegenüber den üblichen Verfahrensschritten zur Reinigung des Abgases, also beispielsweise zusätzliche artfremde Wäsche wie Aminwäschen und/oder katalytische bzw. adsorptive Verfahren und/oder thermische oder katalytische Nachverbrennungsanlagen ist beim erfindungsgemässen Verfahren lediglich eine Hydrierstufe erforderlich. Das in der Schwefelgewinnungsanlage neben flüssigem Schwefel anfallende Abgas enthält im wesentlichen Schwefelwasserstoff, Schwefeldioxid und Kohlendioxid. Vor der Rückführung dieses Abgases in die Sauergaswäsche ist eine Hydrierung erforderlich, da andernfalls Störungen in der vorgeschalteten selektiven Wäsche ausgelöst werden, die vor allem auf den Schwefeldioxidgehalt zurückzuführen sind. Nach der Umsetzung des Schwefeldioxids zu Schwefelwasserstoff während der Hydrierung wird das in die Sauergaswäsche zurückgeführte Gas in der selektiven Wäsche vom Schwefelwasserstoff getrennt. Während der Schwefelwasserstoff und ein geringer Teil des Kohlendioxids erneut mit dem Abgas der Wäsche der Schwefelgewinnung zugeführt wird, wird der hauptsächlich aus Kohlendioxid bestehende Gasballast als schwefelfreie Fraktion mit dem bei der Sauergaswäsche abgetrennten Kohlendioxid abgegeben.

Da beim erfindungsgemässen Verfahren die bei der Schwefelgewinnung anfallenden, Schwefelverbindungen enthaltenden Abgase in das Verfahren zurückgeführt und nicht aus der Anlage austreten, ist es als weiterer Vorteil des erfindungsgemässen Verfahrens anzusehen, dass die Schwefelgewinnung nicht für maximale Schwefelausbeuten im einmaligen Durchgang ausgelegt werden muss. Während übliche auf der Claus-Reaktion beruhende Verfahren Ausbeuten von beispielsweise mehr als 99% anstreben, führt beim erfindungsgemässen Verfahren bereits eine Schwefelausbeute von etwa 85 bis 95%, wie sie beispielsweise in zwei- oder dreistufigen Claus-Analgen erreichbar sind, zu guten Ergebnissen. Die Auslegung der Schwefelgewinnung auf derart reduzierte Ausbeuten im einmaligen Durchgang hat eine wesentliche Verbilligung der Schwefelgewinnungsanlage gegenüber Anlagen nach den bekannten Verfahren zur Folge. Das bei geringerer Schwefelausbeute in erhöhtem Mass auftretende Abgas bedingt zwar eine gewisse Vergrösserung der Anlagenteile, in die das Abgas zurückgeführt wird, diese Mehraufwendungen werden jedoch durch die Einsparung bei der Schwefelrückgewinnung mehr als aufgewogen. Im speziellen Einzelfall ergibt sich die günstigste Umsetzungsrate und die dabei anfallende Menge des Rückführgases aus den jeweils vorliegenden Verfahrensbedingungen und der Art der gewählten Sauergaswäsche.

Das bei der Schwefelgewinnung anfallende Abgas liegt üblicherweise unter einem relativ niedrigen Druck vor, beispielsweise bei Drücken zwischen 1,2 und 5 bar. Da der zu reinigende Rohgasstrom üblicherweise bei höherem Druck anfällt, ist deshalb für die Rückführung des hydrierten Abgases eine Verdichtung erforderlich.

Bei dem erfindungsgemässen Waschverfahren enthält die Sauergaswäsche einen Regenerierteil mit einer Schwefelwasserstoff-Anreicherungsstufe, in der aus dem beladenen Waschmittel eine schwefelwasserstofffreie, an Kohlendioxid angereicherte Gasphase abgetrennt wird. Das bezüglich des Kohlendioxids teilweise regenerierte, noch den gesamten abgetrennten Schwefelwasserstoff enthaltende Waschmittel z.B. Methanol, wird dann erst in einer nachfolgenden Regenerierung vollständig von den gelösten Komponenten

befreit. Das hydrierte zweite Abgas wird dabei in die Schwefelwasserstoff-Anreicherungsstufe eingeführt und hier der grösste Teil des Kohlendioxids abgetrennt. Diese Verfahrensweise hat gegenüber der Rückführung in den zu reinigenden Gasstrom den Vorteil, dass eine derartige Schefelwasserstoff-Anreicherungsstufe bei einem erheblich geringeren Druck als die Waschstufe des Rohgases betrieben wird, so dass der für die Verdichtung des hydrierten Abgases erforderliche Energieaufwand reduziert wird. Ausserdem würde das hydrierte Abgas bei einer Rückführung in den zu reinigenden Gasstrom in diesem Fall zusätzliche Belastung der Waschsäule bedeuten, da ohnehin der grösste Teil des hydrierten Abgases ausgewaschen wird und in den Regenerierteil gelangt.

Bei der physikalischen Wäsche wird unter hohem Druck aus der Waschstufe abgezogenes beladenes Waschmittel vor Einspeisung in die Schwefelwasserstoff-Anreicherungsstufe meist entspannt. Dabei gasen im Waschmittel gelöste leicht flüchtige Komponenten aus. Bei der Reinigung eines wasserstoffhaltigen Gasstroms bildet sich dabei eine wasserstoffreiche Gasphase, die üblicherweise nach einer Rückverdichtung in den Gasstrom zurückgeführt und erneut in die Waschstufe eingeleitet wird. In weiterer Ausgestaltung der Erfindung wird bei einem derartigen Verfahren ein Teilstrom der bei der Entspannung anfallenden wasserstoffhaltigen Gasphase abgezweigt und als Hydriergas für die Hydrierung des Abgases der Schwefelgewinnung verwendet.

In einer anderen Ausgestaltung des Verfahrens kann zur Hydrierung ein Teil des wasserstoffhaltigen gereinigten Gasstroms verwendet werden.

Wie bereits eingangs ausgeführt, wird insbesondere bei der Herstellung wasserstoffreicher Gasströme oftmals eine Kohlenmonoxid-Konvertierung eingeschaltet. In derartigen Fällen kann es günstig sein, das erfindungsgemäss zu hydrierende Abgas aus der Schwefelgewinnung direkt mit dem der Kohlenmonoxid-Konvertierung zuzuführenden Gasstrom zu vermischen und durch diese Reaktionszone zu führen. Da die Konvertierung unter Bedingungen abläuft, bei denen das Abgas hydriert wird, kann in solchen Fällen eine zusätzliche Hydrierstufe entfallen.

Neben einer Rückführung in eine Kohlenmonoxid-Konvertierung kommen auch Rückführungen in andere Reaktionsstufen, in denen eine Hydrierung des Abgases erfolgt, in Frage. So ist beispielsweise eine Rückführung in eine Kohle- oder Ölvergasung möglich, sofern ein solcher Verfahrensschritt zur Herstellung des zu reinigenden Gasstroms vorgesehen ist.

Weitere Einzelheiten des erfindungsgemässen Verfahrens werden nachfolgend anhand der in den Zeichnungen schematisch dargestellten Ausführungsbeispiele erläutert.

Es zeigen:

Figur 1 ein Verfahrensschema für eine einfache Ausführung des erfindungsgemässen Verfahrens,

Figur 2 ein erweitertes Verfahrensschema und

Figur 3 eine spezielle Verfahrensführung in Verbindung mit einer physikalischen Sauergaswäsche.

Bei dem in Figur 1 dargestellten Ausführungsbeispiels gelangt der zu reinigende Gasstrom über Leitung 1 in eine Sauergaswäsche 2, in der insbesondere Kohlendioxid und Schwefelwasserstoff aus dem Gasstrom abgetrennt werden. Das gereinigte Gas verlässt die Sauergaswäsche über Leitung 3. Die selektive Sauergaswäsche, die mit einer physikalisch wirkenden Waschflüssigkeit durchgeführt wird, liefert zwei Abgasströme unterschiedlicher Zusammensetzung. Das über Leitung 4 abgezogene Abgas enthält maximal einige ppm Schwefelverbindungen und besteht im wesentlichen aus dem aus dem Gasstrom abgetrennten Kohlendioxid. Daneben können bei einer Regenerierung des Waschmittels unter Verwendung eines Strippgases auch beträchtliche Mengen dieses Strippgases in diesem Abgasstrom enthalten sein.

Der über Leitung 5 aus der Sauergaswäsche 2 abgezogene Abgasstrom enthält die aus dem Gasstrom ausgewaschenen Schwefelverbindungen und daneben noch eine mehr oder weniger grosse Menge anderer Komponenten, beispielsweise einen Teil des ausgewaschenen Kohlendioxids oder bei der Regenerierung verwendete Strippgas. Dieser Gasstrom wird in eine auf der Claus-Reaktion basierenden Schwefelgewinnungsanlage 6 zu elementarem Schwefel aufgearbeitet. Dabei in flüssiger Form anfallender Schwefel wird über Leitung 7 abgezogen. Ein bei der Schwefelrückgewinnung anfallendes Abgas, das zum grössten Teil aus Kohlendioxid besteht, aber auch Schwefelverbindungen wie Schwefeldioxid und Schwefelwasserstoff enthält, wird über Leitung 8 in eine Hydrierstufe 9 geleitet. In dieser Verfahrensstufe wird insbesondere das im über Leitung 8 herangeführten Abgas enthaltene Schwefeldioxid katalytisch umgesetzt. Das hydrierte Abgas wird über Leitung 10 abgezogen und nach Verdichtung im Kompressor 11 in die Sauergaswäsche und hierbei insbesondere in die Schwefelwasserstoff-Anreicherungsstufe des Regenerierteiles zurückgeführt. Damit gelangen sämtliche aus der Schwefelgewinnungsanlage 6 austretenden schwefelhaltigen Abgase wieder in die Sauergaswäsche 2 zurück, so dass praktisch keinerlei Schwefelverbindungen an die Umgebung abgegeben werden.

Das in der Figur 2 dargestellte Verfahrensschema zeigt einige Ergänzungen bzw. Abwandlungen zum eben in seiner einfachsten Form beschriebenen Verfahrensprinzip. In vielen Fällen wird bei der Regenerierung eines beladenen Waschmittels eine Entspannung durchgeführt, bei der eine Ausgasung von Komponenten erfolgt, die im gereinigten Rohgasstrom erwünscht sind. Deshalb wird diese ausgegaste Fraktion üblicherweise über eine Leitung 12 abgezogen und nach Verdichtung in einem Kompressor 13 auf den Druck des zu reinigenden Gasstroms in diesen zurückgeführt. Bei der Reinigung wasserstoffhaltiger Gasströme wird in dieser Fraktion

stets ein relativ hoher Wasserstoffanteil enthalten sein, so dass es zweckmässig ist, einen Teilstrom über Leitung 14 abzuziehen und als Hydriergas in die Hydrierstufe 9 einzuführen.

Bei dem in der Figur 3 dargestellten Ausführungsbeispiel wird ein wasserstoffreiches Rohgas, beispielsweise ein durch partielle Oxidation und nachfolgende Kohlenmonoxid-Konvertierung gewonnenes Rohgas, über Leitung 17 herangeführt und nach Vermischung mit einem Rückführgas bei 18 in einen Wärmetauscher 19 geleitet und dort auf tiefe Temperaturen, beispielsweise auf Temperaturen zwischen −20 und −40 °C abgekühlt. Vor der Kühlung des Gasstroms wird über Leitung 20 eine geringe Menge Methanol eingespritzt, um eine Eisbildung durch im Gasstrom enthaltenen Wasserdampf bei der Abkühlung zu verhindern. Das abgekühlte Gas wird in einem Abscheider 21 vom bei der Abkühlung gebildeten Kondensat, im wesentlichen im Rohgas enthaltendes Wasser und schwerere Kohlenwasserstoffe, getrennt. Der Abgekühlte Gasstrom gelangt dann über Leitung 22 in den unteren Bereich einer Waschsäule 23. Die Wäsche des Gasstroms wird in diesem speziellen Ausführungsfall in einer Waschsäule 23 mit zwei verschiedenen Abschnitten durchgeführt. Am Kopf der Waschsäule wird über Leitung 24 regeneriertes reines Methanol als Waschmittel aufgegeben. Dadurch wird im oberen Abschnitt der Waschsäule eine Feinreinigung des Gases durchgeführt, wobei letzte Spuren an Sauergasen im Methanol gelöst werden. Das im Gegenstrom zum aufsteigenden Gasstrom herabrieselnde Methanol nimmt dann den grössten Teil des im Gasstrom enthaltenen Kohlendioxids auf. Zur Abführung der dabei entwickelten grossen Lösungswärme wird das Methanol in einer Kühlstufe 25 durch ein Kältemittel abgekühlt. Ein Teilstrom 26 dieses mit Kohlendioxid vorbeladenen Methanols wird dem unteren Bereich der Waschsäule 23 aufgegeben, aus dem es den im Rohgas enthaltenen Schwefelwasserstoff abtrennt. Da durch die Auswaschung von Schwefelwasserstoff und gegebenenfalls im Gasstrom enthaltenen Kohlenoxidsulfid nur eine geringe Erwärmung des Methanols eintritt, ist in dieser Stufe keine Kühlung erforderlich.

Der auf seinem Strömungsweg durch die Waschsäule 23 zunächst vom Schwefelwasserstoff und dann vom Kohlendioxid befreite Rohgasstrom wird über Leitung 27 vom Kopf der Waschsäule 23 abgezogen und nach Erwärmung im Wärmetauscher 19 gegen den abzukühlenden ungereinigten Gasstrom als gereinigter Wasserstoff aus dem betrachteten Teil der Anlage abgezogen.

Im Sumpf der Waschsäule 23 sammelt sich mit Schwefelwasserstoff und Kohlendioxid beladenes Methanol, das über Leitung 28 abgezogen und nach Entspannung im Ventil 29 in einen Abscheider 30 geleitet wird. Die bei der Entspannung 29 entstehende wasserstoffreiche Gasphase wird über die Leitungen 31 und 32 zum Verdichter 33 geführt, dort auf den Druck des zu reinigenden Gasstroms rückverdichtet und nach Abzug der Verdichtungswärme in einem Nachkühler dem Rohgasstrom bei 18 zugemischt.

In entsprechender Weise wird das über Leitung 34 abgezogene, mit Kohlendioxid beladene Methanol aus dem oberen Bereich der Waschsäule 23 im Ventil 35 entspannt und im Abscheider 36 von den dabei ausgasenden Bestandteilen abgetrennt. Die Gasphase gelangt in die Leitung 32 und wird gemeinsam mit der Gasfraktion aus dem Abscheider 30 ins Rohgas zurückgeführt.

Das im Abscheider 30 anfallende, mit Schwefelwasserstoff und Kohlendioxid beladene Methanol wird über Leitung 37 in den mittleren Bereich einer Schwefelwasserstoff-Anreicherungssäule 38 eingespeist. In dieser Säule wird ein Teil des im Methanol gelösten Kohlendioxids durch Strippung mit Stickstoff abgetrennt. Der Stickstoff wird dazu über Leitung 39 in den unteren Bereich der Schwefelwasserstoff-Anreicherungssäule eingespeist. Um zu verhindern, dass am Kopf der Schwefelwasserstoff-Anreicherungssäule 38 Schwefelwasserstoff austritt, wird über Leitung 40 am Kopf der Säule 38 ein mit Kohlendioxid beladenes Methanol aus dem Abscheider 36 aufgegeben. Dieses teilbeladene Methanol wirkt für durch die Strippung freigesetzten Schwefelwasserstoff als Waschmittel, so dass am Kopf der Säule 38 über Leitung 41 ein schwefelfreier Gasstrom abgezogen wird, der im wesentlichen nur aus Kohlendioxid und Stickstoff besteht und nach Anwärmung im Wärmetauscher 19 gegen den zu reinigenden Gasstrom an die Umgebung abgegeben werden kann.

Im Sumpf der Schwefelwasserstoff-Anreicherungssäule 38 fällt ein Methanol an, das den gesamten aus dem Gasstrom abgetrennten Schwefelwasserstoff, gegebenenfalls das im Gasstrom enthaltene Kohlenoxidsulfid sowie einen Teil des ausgewaschenen Kohlendioxids enthält. Dieses Methanol wird über Leitung 42 abgezogen, durch eine Pumpe 43 in eine nachfolgende Regeneriersäule 44 gefördert und vor Einspeisung in die Regeneriersäule noch im Wärmetauscher 45 gegen sich abkühlendes regeneriertes Methanol erwärmt.

In der Regeneriersäule werden die noch im Methanol gelösten Bestandteile mit Methanoldampf ausgetrieben. Zur Erzeugung des Methanoldampfs ist im unteren Bereich der Regeneriersäule 44 eine mit Dampf betriebene Heizung 46 vorgesehen. Die Methanoldämpfe werden am Kopf der Säule durch eine Kühlung 47 wieder auskondensiert, so dass über Leitung 48 lediglich die aus dem Methanol freigesetzten Komponenten abgezogen werden. Im Sumpf der Regeneriersäule anfallendes gereinigtes Methanol wird über Leitung 49 abgezogen und durch die Pumpe 50 zunächst durch den Wärmetauscher 45 und anschliessend in die Leitung 24 gefördert, um der Waschsäule 23 erneut aufgegeben zu werden. Ein Teilstrom des regenerierten Methanols wird durch die Pumpe 51 über Leitung 52 in eine weitere Trennsäule 53 geleitet, in der im regenerierten Methanol noch enthaltenes Wasser abgetrennt wird. In diese Trennsäule 53 wird auch das im

Abscheider 21 aus dem zu reinigenden Gasstrom abgetrennte Kondensat eingeleitet. Hierzu wird es über Leitung 54 herangeführt, im Wärmetauscher 55 gegen Methanol erwärmt und im Drosselventil 56 auf den Druck der Trennsäule 53 entspannt. Das entspannte Kondensat wird in den oberen, als Abscheider ausgebildeten Bereich 57 der Säule 53 eingeleitet. Bei der Entspannung ausgegaste Bestandteile werden über Leitung 58 abgezogen und in die Regeneriersäule 44 eingeleitet. Das verbliebene Kondensat gelangt über Leitung 59 in die Säule 53. Das von Wasser befreite Methanol wird über Leitung 60 abgezogen und nach Abkühlung im Wärmetauscher 55 in den oberen Bereich der Regeneriersäule 44 eingespeist. Abgetrenntes Wasser wird aus dem Sumpf der Trennsäule 53 über Leitung 61 abgezogen.

Die vom Kopf der Regeneriersäule 44 über Leitung 48 abgezogene Fraktion enthält den aus dem Gasstrom abgetrennten Schwefelwasserstoff und einen Teil des abgetrennten Kohlendioxids. Diese Fraktion wird in eine Schwefelgewinnungsanlage 62, die auf der Claus-Reaktion beruht, eingeleitet. Zur Erzeugung des für die Claus-Reaktion erforderlichen Schwefeldioxids wird über Leitung 63 ein sauerstoffhaltiger Gasstrom zur Teilverbrennung des Schwefelwasserstoffs zugeführt. Die Verbrennung wird vorteilhaft mit reinem Sauerstoff durchgeführt, da bei Verbrennung mit Luft ein erheblicher Gasballast durch Stickstoff in die Anlage eingebracht wird. In der Schwefelgewinnungsanlage erzeugter elementarer Schwefel wird über Leitung 64 in flüssiger Form abgezogen, während über Leitung 65 ein im wesentlichen Kohlendioxid, Schwefelwasserstoff und Schwefeldioxid enthaltender Abgasstrom anfällt. Dieses Abgas wird in einer nachgeschalteten Hydrierstufe 66 hydriert. Der für die Hydrierung erforderliche Wasserstoff wird über Leitung 67 herangeführt und ist ein Teilstrom des über Leitung 31 aus dem Abscheider 30 abgezogenen wasserstoffhaltigen Gases. Die Hydrierstufe 66 für das Abgas aus der Schwefelgewinnung 62 ist ein katalytischer Reaktor und gegebenenfalls mit Wärmeaustauschern zur Erreichung der nötigen Reaktionstemperatur und zur Abkühlung des abreagierten Gases nach der Hydrierung versehen. Besonders vorteilhaft sind solche Hydrierverfahren, die ungefähr bei der Temperatur des über Leitung 65 anfallenden Abgases arbeiten. Die Temperatur des Abgases einer Claus-Anlage liegt üblicherweise bei etwa 150 °C.

Das hydrierte Abgas wird über Leitung 68 einem Kompressor 69 zugeleitet und von ihm auf den Druck der Schwefelwasserstoff-Anreicherungssäule 38 verdichtet. Nach Verdichtung, Abführung 70 der Kompressionswärme und Entfernung 71 des bei der Hydrierung gebildeten Wassers wird das hydrierte Abgas in den unteren Bereich der Schwefelwasserstoff-Anreicherungsstufe 38 eingespeist. Der aus Kohlendioxid und gegebenenfalls anderen Inertgasen, beispielsweise Stickstoff bestehende Anteil durchströmt die Säule 38 und wird am Kopf über Leitung 41 abgezogen. Die im Abgas enthaltenen Schwefelverbindungen bestehen nach der Hydrierung fast nur noch aus Schwefelwasserstoff und werden in der Säule 38 durch herabrieselndes teilbeladenes Methanol ausgewaschen und erneut über den Sumpf der Säule 38 abgezogen und nach weiterer Aufarbeitung in der Säule 44 wieder in die Schwefelgewinnungsanlage 62 zurückgeführt.

In einem speziellen Ausführungsbeispiel des erfindungsgemässen Verfahrens gemäss Figur 3 wurde ein durch partielle Oxidation und nachfolgende Kohlenmonoxid-Konvertierung gewonnener Gasstrom gereinigt, der 64,3 Mol.% Wasserstoff, 2,8 Mol.% Inertgase (Stickstoff, Kohlenmonoxid, Argon, Methan), 32,3 Mol.% Kohlendioxid, 0,65 Mol.% Schwefelwasserstoff und 7,7 ppm Kohlenoxidsulfid enthält. Dieser Gasstrom wird über Leitung 17 bei einer Temperatur von 36 °C und unter einem Druck von 75,6 bar herangeführt. Über Leitung 27 wird gereinigter Wasserstoff mit einer Konzentration von etwa 98 Mol.% abgezogen, der lediglich noch durch etwa 2 Mol.% Inertgase und 100 ppm Kohlendioxid verunreinigt ist. Bei der Regenerierung des beladenen Methanols fällt in Leitung 48 eine Schwefelwasserstofffraktion an, die zu 34,9 Mol.% aus Schwefelwasserstoff besteht und daneben 62,7 Mol.% Kohlendioxid und 0,03 Mol.% Kohlenoxidsulfid enthält. Der restliche Anteil besteht aus Stickstoff und einer sehr geringen Menge Wasserstoff. Das Gas wird bei einer Temperatur von 25 °C und unter einem Druck von etwa 1,5 bar abgezogen und in eine Claus-Anlage geleitet, um zu elementarem Schwefel aufgearbeitet zu werden. Aus der Claus-Anlage 62 tritt über Leitung 65 ein Abgas aus, das zu 93,9 Mol.% aus Kohlendioxid und 3,4 Mol.% Stickstoff besteht. Dieses Gas ist ferner mit Schwefelverbindungen verunreinigt, und zwar mit 1,8 Mol.% Schwefelwasserstoff sowie 0,9 Mol.% Schwefeldioxid. Es wird deshalb in der Hydrierung 66 mit einem Hydriergas umgesetzt, das 61,8 Mol.% Wasserstoff, 5,5 Mol.% Inertgase, 32,4 Mol.% Kohlendioxid, 0,3 Mol.% Schwefelwasserstoff und 3 ppm Kohlenoxidsulfid besteht. Die Menge des Hydriergases beträgt etwa 5% des zu hydrierenden Gasstroms. Das Claus-Abgas, das bei einer Temperatur von etwa 150 °C durch die Hydrierstufe geleitet wird, fällt schliesslich in Leitung 68 in einer Zusammensetzung von 0,3 Mol.% Wasserstoff, 3,7 Mol.% Inertgase, 93,4 Mol.% Kohlendioxid und 2,6 Mol.% Schwefelwasserstoff an und wird in die Schwefelwasserstoff-Anreicherungsstufe 38 zurückgeführt. In diesem Ausführungsbeispiel wurde eine dreistufige Claus-Anlage mit einer 95%igen Schwefelausbeute vorgesehen.

In einem weiteren Ausführungsbeispiel wurde die Schwefelgewinnung in einer zweistufigen Claus-Analge mit einer 85%igen Ausbeute durchgeführt. Daraus resultiert eine um etwa 18% höhere Abgasmenge aus der Claus-Anlage, die 3,3 Mol.% Stickstoff, 89,2 Mol.% Kohlendioxid, 5,0 Mol.% Schwefelwasserstoff und 2,5 Mol.% Schwefeldioxid enthält. Dieses Abgas wird mit einer Hydriergasmenge, die etwa 13% der Abgasmenge ausmacht, umgesetzt, wodurch sich ein

Rückführgas ergibt, das 0,7 Mol.% Wasserstoff, 3,8 Mol.% Inertgase, 88,4 Mol.% Kohlendioxid und 7,1 Mol.% Schwefelwasserstoff enthält.

Das in die Wäsche zurückgeführte hydrierte Abgas fällt in einer Menge an, die im Fall des ersten Beispiels etwa 1,3% und im Fall des zweiten Beispiels etwa 1,5% des zu reinigenden Gasstroms ausmacht.

**Patentansprüche**

1. Verfahren zum Reinigen eines mindestens mit Kohlendioxid und Schwefelwasserstoff verunreinigten Gasstromes durch eine für Schwefelwasserstoff selektive Sauergaswäsche, aus der ein mit Schwefelwasserstoff angereichertes erstes Abgas abgezogen und einer Schwefelgewinnung zugeführt wird, und bei der Schwefelgewinnung anfallendes, mindestens Kohlendioxid und Schwefelverbindungen enthaltendes zweites Abgas hydriert und danach zur Sauergaswäsche zurückgeleitet wird, dadurch gekennzeichnet, dass die Sauergaswäsche mit einem physikalisch wirkenden Waschmittel mit unterschiedlicher Löslichkeit für Schwefelwasserstoff und Kohlendioxid durchgeführt wird, dass die Sauergaswäsche einen Waschteil sowie einen Regenerierteil mit einer Schwefelwasserstoff-Anreicherungsstufe enthält und dass das hydrierte zweite Abgas in die Schwefelwasserstoff-Anreicherungsstufe zurückgeleitet wird.

2. Verfahren nach Anspruch 1 zur Reinigung eines wasserstoffhaltigen Gasstroms, dadurch gekennzeichnet, dass aus dem Waschteil der Sauergaswäsche abgezogenes beladenes Waschmittel auf einen niedrigeren Druck entspannt wird, dass die dabei ausgasenden Komponenten zu einem Teil als Hydriergas für die Hydrierung des zweiten Abgases verwendet und restlich in den zu reinigenden Gasstrom zurückgeführt werden, und dass die verbleibende flüssige Phase in die Schwefelwasserstoff-Anreicherungsstufe eingespeist wird.

3. Verfahren nach Anspruch 1 zur Reinigung eines wasserstoffhaltigen Gasstroms, dadurch gekennzeichnet, dass ein Teilstrom des gereinigten Gasstroms für die Hydrierung des zweiten Abgases verwendet wird.

4. Verfahren nach Anspruch 1, dadurch gekennzeichnet, dass das zweite Abgas zur Hydrierung in eine der Sauergaswäsche vorgeschaltete Kohlenmonoxid-Konvertierung zurückgeleitet wird.

5. Verfahren nach Anspruch 1, dadurch gekennzeichnet, dass das zweite Abgas zur Hydrierung in eine Reaktionszone zurückgeleitet wird, in der der Gasstrom durch Vergasung von kohlenstoffhaltigem Rohmaterial erzeugt wird.

**Revendications**

1. Procédé pour épurer un courant gazeux contenant comme impuretés au moins du gaz carbonique et de l'hydrogène sulfuré au moyen d'un système de lavage de gaz acides agissant sélectivement sur l'hydrogène sulfuré et duquel on dérive un premier gaz résiduaire enrichi en hydrogène sulfuré qui est introduit dans un système de récupération de soufre, et où un second gaz résiduaire produit lors de la récupération du soufre et contenant au moins du gaz carbonique et des composés soufrés est hydrogéné et est ensuite renvoyé au système de lavage de gaz acides; caractérisé en ce que le lavage de gaz acides est effectué avec un agent de lavage agissant physiquement et ayant des capacités différentes de dissolution de l'hydrogène sulfuré et du gaz carbonique, en ce que le système de lavage de gaz acides comporte une partie de lavage ainsi qu'une partie de régénération pourvu d'un étage d'enrichissement en hydrogène sulfuré et en ce que le second gaz résiduaire hydrogéné est recyclé dans l'étage d'enrichissement en hydrogène sulfuré.

2. Procédé selon la revendication 1, pour l'épuration d'un courant gazeux contenant de l'hydrogène, caractérisé en ce qu'un agent de lavage chargé est déchargé de la partie de lavage du système de lavage de gaz acides est détendu à une pression plus basse, en ce que les composants ainsi gazéifiés sont utilisés en partie comme gaz d'hydrogénation pour l'hydrogénation du second gaz résiduaire tandis que le reste est recyclé dans le courant de gaz à épurer et en ce que la phase liquide restante est introduite dans l'étage d'enrichissement en hydrogène sulfuré.

3. Procédé selon la revendication 1, pour épurer un courant de gaz contenant de l'hydrogène, caractérisé en ce qu'un courant partiel du courant gazeux épuré est utilisé pour l'hydrogénation du second gaz résiduaire.

4. Procédé selon la revendication 1, caractérisé en ce que le second gaz résiduaire est recyclé pour une hydrogénation dans un système de conversion d'oxyde de carbone placé en amont du système de lavage de gaz acides.

5. Procédé selon la revendication 1, caractérisé en ce que le second gaz résiduaire est recyclé, pour une hydrogénation, dans une zone de réaction où le courant de gaz est produit par gazéification d'une matière brute contenant du carbone.

**Claims**

1. A process for purifying a gas stream contaminated with at least carbon dioxide and hydrogen sulphide, by means of an acid gas wash which is selective with regard to hydrogen sulphide from which a first waste gas, enriched with hydrogen sulphide, is withdrawn and fed to a sulphur recovery step, and wherein a second waste gas which occurs during the sulphur recovery step and contains at least carbon dioxide and sulphur compounds is hydrogenated and subsequently returned to the acid gas wash, characterised in that the acid gas wash is carried out using a physically-active washing agent which has differing solubilities for hydrogen sulphide and carbon dioxide; that the acid gas wash contains a washing section and a regenerating section with a hydrogen sulphide enrichment stage; and that the hydrogenated second waste gas is returned to the hydrogen sulphide enrichment stage.

2. A process according to Claim 1 for purifying a gas stream which contains hydrogen, characterised in that charged washing agent withdrawn from the washing section of the acid gas wash is expanded to a lower pressure; that the components which are thus released in gase ous form are partially used as hydrogenating gas for the hydrogenation of the second waste gas, and for the remainder are returned to the gas stream to be purified, and that the remaining liquid phase is fed into the hydrogen sulphide enrichment stage.

3. A process according to Claim 1 for purifying a gas stream which contains hydrogen, characterised in that a sub-stream of the purified gas stream is used for the hydrogenation of the second waste gas.

4. A process according to Claim 1, characterised in that the second waste gas is returned for hydrogenation to a carbon monoxide conversion unit which precedes the acid gas wash.

5. A process according to Claim 1, characterised in that the second waste gas is returned for hydrogenation to a reaction zone in which the gas stream is produced by gasification of raw material containing carbon.

1/2

Fig. 1

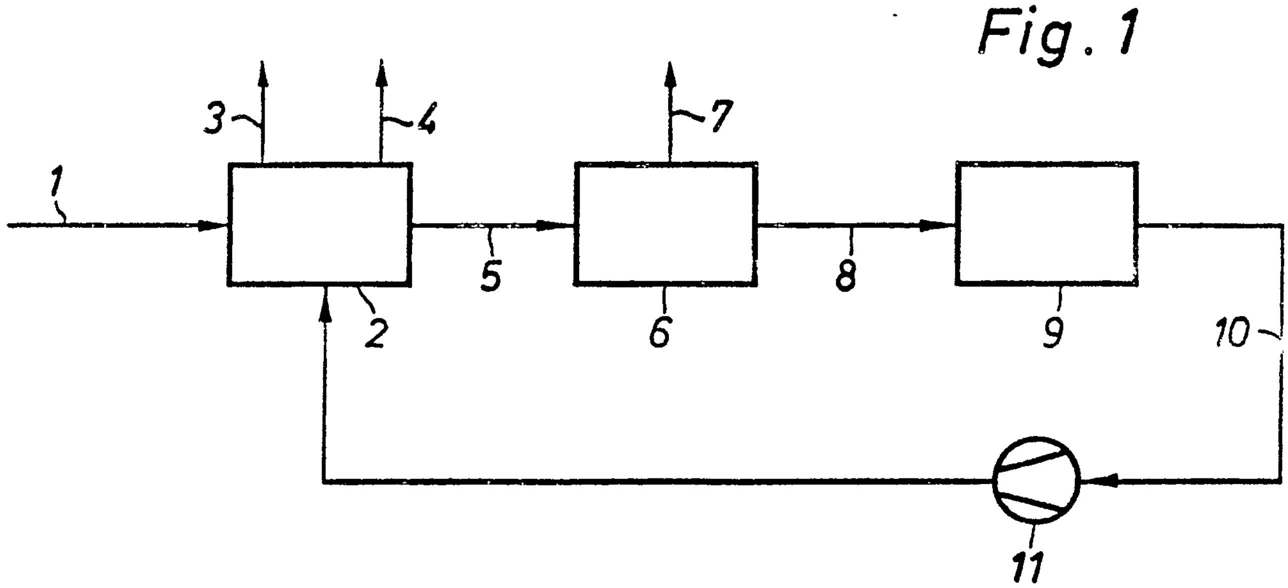


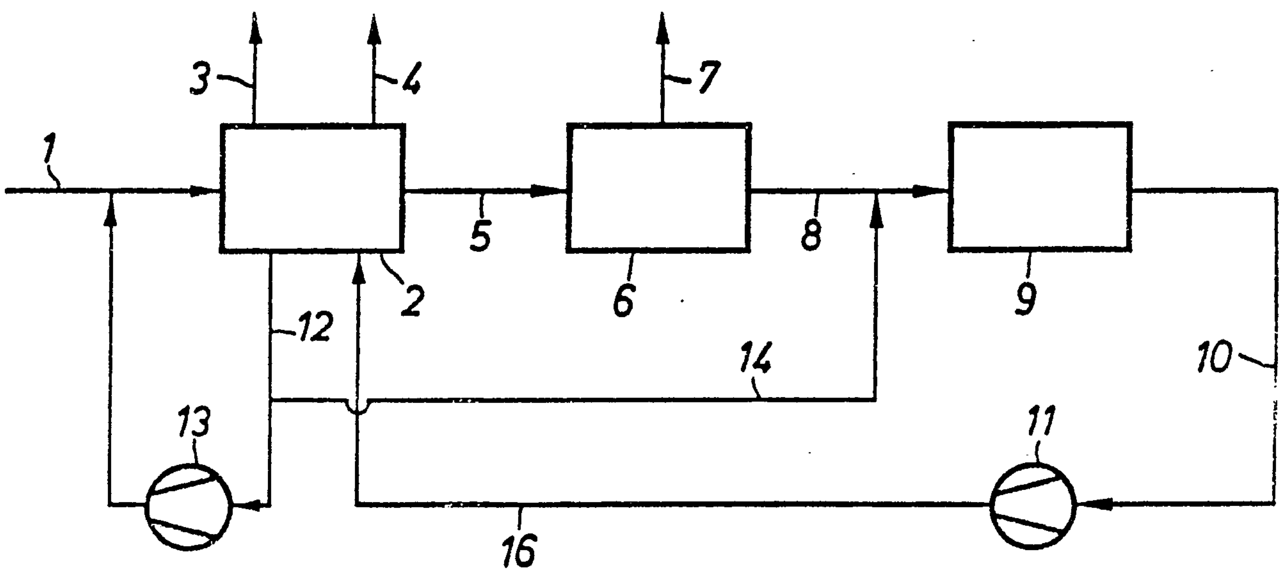


Fig. 2

2/2

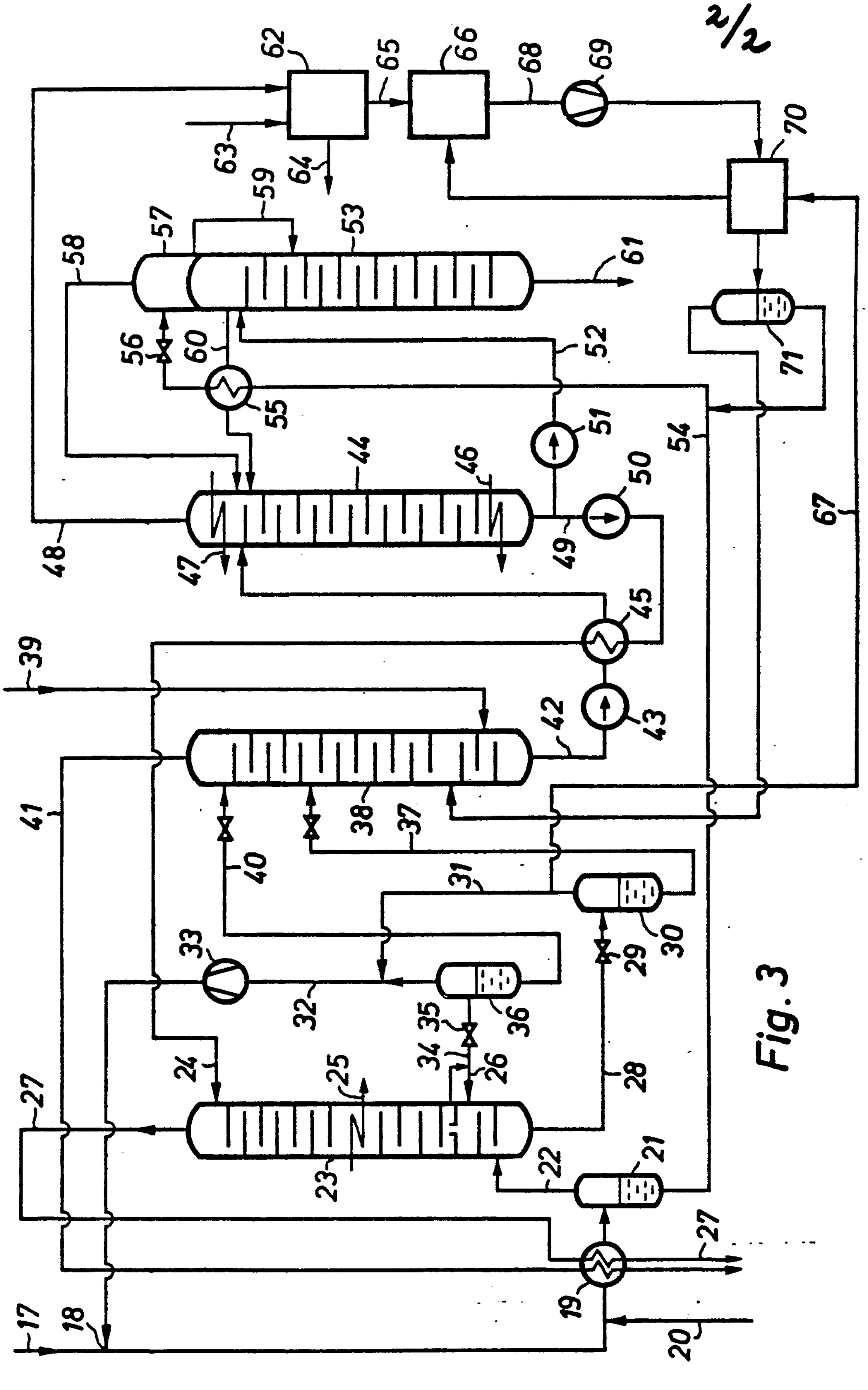
17
18
19
20
21
22
23
24
25
26
27
28
29
30
31
32
33
34
35
36
37
38
39
40
41
42
43
44
45
46
47
48
49
50
51
52
53
54
55
56
57
58
59
60
61
62
63
64
65
66
67
68
69
70
71

Fig. 3